# FASCICULE DE BREVET EUROPEEN

(11) **EP 0 493 215 B1**
(45) Date de publication et mention de la délivrance du brevet: **26.04.2000**
(21) Numéro de dépôt: 91403468.1
(22) Date de dépôt: 19.12.1991
(51) Int. Cl.: G06F 13/38, H04L 29/00

(54) **Architecture informatique distribuée utilisant un réseau local de type CSMA/CD**
Verteilte Rechnerarchitektur die ein CSMA/CD ähnliches lokales Netzwerk benutzt
Distributed computer architecture using a CSMA/DC type local network

(30) Priorité: 20.12.1990 FR 9016031
(43) Date de publication de la demande: 01.07.1992
(73) Titulaire: BULL S.A., 78430 Louveciennes (FR)
(72) Inventeur: Le Gallo, Rémy, F-78150 Le Chesnay (FR); Malgogne, Bernard, F-28100 Dreux (FR); Lyvet, Gérard, F-78340 Les Clayes sous Bois (FR); Bonifas, Josué, F-78180 Montigny Le Bretonneux (FR)
(74) Mandataire: Colombe, Michel

(56) Documents cités:
- COMPUTER COMMUNICATION REVIEW. vol. 17, no. 5, 11 Août 1987, NEW YORK US pages 369 - 380; I. CHLAMTAC: 'Lan-hub: an ETHERNET compatible low-cost/high performance communication solution'
- IEEE INFOCOM '88 THE CONFERENCE ON COMPUTER COMMUNICATIONS 27 Mars 1988, NEW- ORLEANS, LOUISIANA, US pages 1072 - 1081; M. STEETHARAN: 'Architecture of a multiprocessor-based high speed communication processor'
- ELECTRONIC DESIGN. vol. 31, no. 13, Juin 1983, HASBROUCK HEIGHTS, NEW JERSEY pages 151 - 156; N. WILMARTH: 'Two-chip set unlocks ETHERNET gateway'
- WESCON TECHNICAL PAPERS 30 Octobre 1984, ANAHEIM, CA, US pages 1 - 8; G. RAUH: 'Generalized data transfer engine for CSMA and token local area networks'

## Description

La présente invention concerne une architecture informatique distribuée utilisant un réseau local de type à méthode d'accès à test de porteuse et détection de collision, réseau designé fréquemment par son sigle anglo-saxon CSMA/CD. Elle est plus particulièrement applicable aux réseaux locaux de type ETHERNET ou CHEAPERNET. Ceux-ci seront désignés, dans la suite du texte sous le nom global de réseaux ETHERNET.

Les réseaux de communications sont constitués par une pluralité d'unités, généralement appelées "équipement terminal de traitement de données", en abrégé, ETTD (Data Terminal Equipment, en langue anglaise, en abrégé, DTE). Elles sont encore appelées terminaux ou stations par commodité de langage. Un ordinateur relié à un réseau est considéré comme un terminal. Les terminaux communiquent entre eux par l'intermédiaire d'un support de transmission qui peut être par exemple un câble coaxial, dans le cas des réseaux ETHERNET.

Les différents terminaux d'un réseau émettent des messages d'information et reçoivent ceux émis par les autres. Un message est constitué par un ensemble de blocs élémentaires d'informations comprenant un nombre déterminé d'informations binaires. Ces blocs sont encore appelés trames (frame, en langue anglaise). Chaque trame est structurée et comporte des informations définissant le début et la fin de celle-ci, l'adresse du terminal auquel est destiné le message, l'adresse du terminal émetteur, la longueur des données, les données utiles, etc..

Les réseaux locaux (local area network, en langue anglaise, en abrégé LAN) sont des réseaux limités à un emplacement géographique de surface restreinte, les distances entre les différentes stations étant de l'ordre de quelques mètres à dizaines de mètres, voire pouvant atteindre quelques kilomètres.

Les réseaux locaux de type CSMA/CD sont d'un usage fréquent dans la pratique courante. Ils sont normalisés par le Comité IEEE de l'Institute of Electrical and Electronic Engineers, sous la forme d'une norme dite 802.3 (reprise par l'I.S.O., Organisation Internationale de Normalisation, sous la forme de la norme ISO 8 802.3).

Cette norme définit un certain nombre de dispositions établissant le mode de communication entre les différents terminaux, ainsi que le format des trames et le protocole régissant le dialogue entre les différentes stations. On rappelle qu'un protocole définit les règles d'accès aux différentes stations.

Les réseaux ETHERNET ont un débit de transmission des données de 10 Mbits/s, et leur support de transmission normalisé est un câble coaxial d'impédance caractéristique 50 Ohms.

On sait qu'un ordinateur est constitué d'une part, d'un ou de plusieurs processeurs centraux, de processeurs d'entrée/sortie, de mémoires vives et mémoires mortes associées à l'ensemble de ces processeurs, de contrôleurs d'entrée/sortie, d'autre part de différents organes périphériques tels que mémoires à disques ou périphériques d'entrée/sortie permettant l'échange de données avec l'extérieur (terminaux à écran, imprimantes, etc..), ces organes périphériques étant associés à des contrôleurs de périphériques.

L'ensemble des éléments constitutifs précités (en dehors des périphériques) est disposé sur un ensemble de cartes (boards en anglais) dont les dimensions sont normalisées.

Ces cartes sont reliées généralement à un même bus de type parallèle qui assure les communications entre les différents processeurs et le transport des données entre les différentes cartes ainsi que l'alimentation électrique de celles-ci.

Un bus couramment utilisé dans la pratique actuelle est le bus appelé MULTIBUS II dont la marque est déposée par la Société INTEL. L'architecture d'un tel bus est structurée autour d'un bus principal de type parallèle normalisé suivant la norme IEEE 1296.

La tendance du développement technologique des réseaux, l'utilisation de terminaux de plus en plus nombreux, conduisent à développer au sein même des ordinateurs, des serveurs de communication programmés, dont le rôle est de réduire la charge de l'unité centrale de l'ordinateur en effectuant une partie de la gestion, d'une part des messages émis par les différents éléments constitutifs de l'ordinateur vers le réseau de télécommunications auquel ce dernier est relié, et d'autre part des messages provenant des autres terminaux du réseau. Dans la pratique courante, un tel serveur de communication est réalisé autour d'un microprocesseur connecté à une ou plusieurs mémoires, ce microprocesseur travaillant avec un logiciel de base (plus simple que celui de l'unité centrale) contenant des modules spécialisés permettant de gérer le bus commun aux différents éléments constitutifs de l'ordinateur et la ligne de transmission du réseau. Un tel logiciel, qu'on peut appeler logiciel de communication, est par exemple le logiciel appelé CNS utilisé dans les produits de la série DN-7XXX de la Société BULL S.A., et également dans les produits CNS-A₀ et CNS-A₁ de la série d'ordinateurs DPS-7000 de la même Société.

Le développement extrêmement rapide de la puissance et de la capacité de traitement des unités centrales des ordinateurs fait qu'il est possible de faire communiquer un nombre de plus en plus grand de périphériques d'entrée/sortie avec les processeurs centraux de l'ordinateur. Ces périphériques d'entrée/sortie sont des terminaux synchrones ou asynchrones communiquant avec leur environnement extérieur par l'intermédiaire de lignes de transmission ayant des débits pouvant aller de 300 bits/s à 64 kbits/s. Ces terminaux d'entrée/sortie d'un ordinateur communiquent avec l'extérieur par l'intermédiaire d'une grande diversité d'appareils dénommés Modem (contraction des deux mots modulateur-démodulateur) dont la fonction est d'adapter le signal électrique délivré par le terminal d'entrée/sortie au support de transmission qui relie le terminal à son environnement extérieur. Ces Modem sont par exemple définis par les avis V-24, V-28, V-11, V-35, V-36 du CCITT (Comité Consultatif International Télégraphique et Télephonique). Ces différents avis définissent également les modes de transmission et les protocoles sur les liaisons de transmission correspondantes. Celles-ci sont supportées physiquement par des supports de transmission qui ont en fait autant de câbles ou ensembles de fils distincts.

Les grands systèmes informatiques modernes constitués donc par un ordinateur, son serveur de communication et les différents terminaux d'entrée/sortie qui lui sont connectés peuvent compter jusqu'à plusieurs centaines de terminaux qui sont donc relies par autant de câbles ou ensembles de fils à l'ordinateur. Lorsque les terminaux sont répartis dans un site géographique de surface restreinte, l'existence d'un grand nombre de câbles et de fils pose des problèmes mécaniques, physiques (diaphonies, etc..) et d'encombrement trop importants.

On connaît d'ores et déjà des systèmes informatiques connectés à des réseaux par l'intermédiaire de contrôleurs de communication.
Le document COMPUTER COMMUNICATION REVIEW, vol. 17, no. 5, du 11 Août 1987, de I. CHLAMTAC, intitulé 〈〈Lan-Hub : an ETHERNET compatible low cost/high performance communication solution〉〉, décrit un noyau central dit Hub pour réseau de type ETHERNET, qui permet de connecter n stations à ce réseau, selon une forme de préférence en étoile. On peut relier entre eux différents noyaux de manière à former un réseau en cascade.

Le rôle de ce HUB est de recevoir les signaux des stations qui lui sont connectées, de les remettre en forme et de les amplifier avant de les renvoyer soit vers un autre réseau, soit vers d'autres stations, appelées NIU. Chacune de celles-ci peut se voir connecter jusqu'à 4 dispositifs asynchrones.

Le document IEEE INFOCOM 88 THE CONFERENCE ON COMPUTER COMMUNICATIONS, du 27 Mars 88, NEW ORLEANS, LOUISIANA, US, pages 1072-1081, de M. STEETHARAN, Intitulé : 〈〈Architecture of a multiprocessor-based high speed communication processor〉〉 décrit une architecture informatique de réservation de billets d'avion, où une pluralité de terminaux sont connectés entre eux.

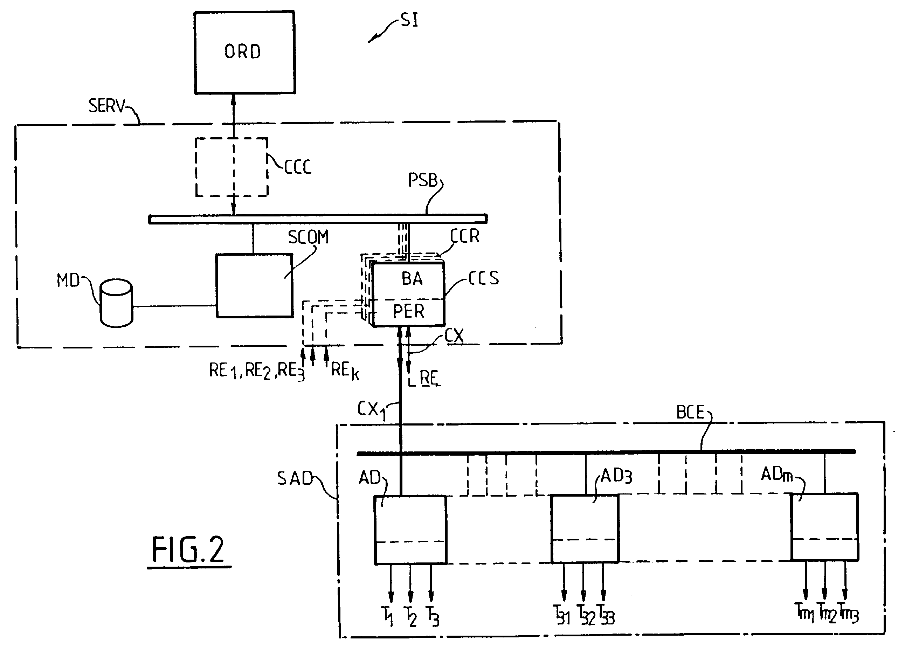

Ces terminaux communiquent par l'intermédiaire de cartes spéciales (paddle cards, figure 2), et de liaisons série type RS232 ou V-35 avec un bus de type VME.

Ce dernier est relié à un contrôleur de communication ICC qui relie de son côté ces mêmes terminaux à un bus de type MULTIBUS I auquel est connectée une pluralité de processeurs centraux d'ordinateurs. ICC comprend :
- une unité de base construite autour d'un premier microprocesseur associé à une mémoire SRAM, dont le rôle est de gérer le transfert des données.
- Une unité périphérique reliée à l'unité de base, d'une part, et au bus VME d'autre part, construite autour d'un second microprocesseur et d'un contrôleur spécifique du bus propriétaire pour transférer en mode DMA les données depuis ce bus VME.

Le document ELECTRONIC DESIGN, vol. 31, Juin 1983, publié chez HASBROUCK HEIGHTS, NEW JERSEY, pages 151, 156, de N. WILMARTH, intitulé 〈〈Two-chip set unlocks ETHERNET gateway〉〉 décrit un contrôleur de communication pour réseau ETHERNET uniquement (Network interface module) comprenant un seul microprocesseur, une mémoire partagée, un contrôleur CSMA/CD, et un adaptateur assurant la connexion sur le réseau par l'intermédiaire d'un transceiver. Le microprocesseur gère la transmission des informations ou leur réception.

Le document WESCON TECHNICAL PAPERS, du 30 Octobre 1984, publié chez ANAHEIM, CA, US,pages 1-8, de G. RAUH, intitulé 〈〈Generalised data transfer engine for CSMA and token local area network〉〉, décrit un contrôleur de communication avec un seul microprocesseur et un contrôleur de transfert classique de type DMA qui assure la liaison entre un ordinateur et le réseau.

Dans la pratique, il est commode de relier chaque système informatique, d'une part à d'autres systèmes, et d'autre part aux terminaux d'entrée/sortie par l'intermédiaire d'un réseau ETHERNET.

C'est un premier objet de l'invention que de déporter toutes les lignes de transmission transportées par ces câbles à l'extérieur de l'espace géographique occupé par l'ordinateur et son serveur de communication. Le serveur de communication est relié alors aux différents terminaux par l'intermédiaire d'une pluralité d'adaptateurs dont la fonction est d'adapter le débit de transmission et le protocole de transmission du réseau ETHERNET aux débits et aux protocoles utilisés sur les différentes lignes de transmission propres à chaque terminal d'entrée/sortie. De préférence, on peut regrouper une pluralité d'adaptateurs dans un même espace géographique constitué, par exemple, par un fond de panier contenant plusieurs de ceux-ci, par exemple une quinzaine, voire davantage.

On constitue ainsi une architecture informatique distribuée contenant une pluralité de systèmes informatiques tels que ceux définis plus haut, chacun de ces systèmes étant constitué par un ordinateur, son serveur de communication, un groupement d'adaptateurs reliant l'ordinateur aux différents terminaux d'entrée/sortie. Un système informatique peut également être constitué par un ensemble de serveurs de communication. Un groupement d'adaptateurs est appelé système adaptateur.

Selon l'invention, l'architecture informatique distribuée est définie par la revendication 1.

D'autres caractéristiques et avantages de la présente invention apparaîtront dans la description suivante donnée à titre d'exemple non limitatif et en se référant aux dessins annexés.

Sur ces dessins :
- la Figure 1 est un schéma très simplifié de l'architecture informatique distribuée selon l'invention,
- la Figure 2 est un schéma très simplifié d'un système informatique comportant un ordinateur et un serveur de communication et un système adaptateur comprenant une pluralité d'adaptateurs reliés chacun à une pluralité de terminaux d'entrée/sortie,
- la Figure 3 montre la structure matérielle d'un contrôleur de communication pour réseau ETHERNET appartenant au serveur de communication montré à la Figure 3,
- la Figure 4 montre la structure matérielle d'un adaptateur de terminaux appartenant au système adaptateur montré à la Figure 2,
- la Figure 5 montre la structure de l'ensemble logiciel/micrologiciel du contrôleur de communication montré à la Figure 3,
- la Figure 6 montre la structure de l'ensemble micrologiciel de l'adaptateur montré à la Figure 4,
- Les Figures 7 et 8 illustrent comment un serveur de communication et un adaptateur de terminal échangent des données,
- La Figure 9 montre un exemple préféré de réalisation d'un système informatique serveur selon l'invention.

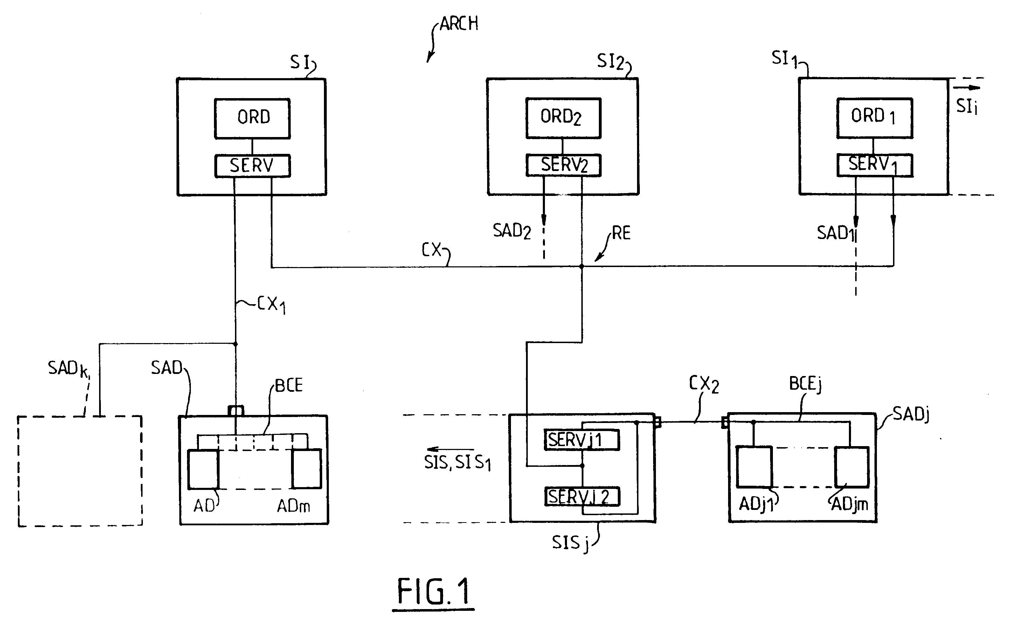

On considère la Figure 1 qui montre une architecture informatique distribuée ARCH comprenant d'une part une pluralité de systèmes informatiques SI, SI₁, SI₂,...., SIᵢ, une pluralité de systèmes informatiques serveurs SIS, SIS₁, .... SISⱼ, faisant tous partie d'un réseau ETHERNET RE, dont le support de transmission est constitué par un câble coaxial CX.

L'architecture ARCH comprend en outre une pluralité de systèmes adaptateurs, tels que le système SAD relié par l'intermédiaire du câble coaxial CX₁ au système informatique SI ou encore le système adaptateur SADⱼ relié par l'intermédiaire du câble coaxial CX₂ au système informatique serveur SISⱼ.

De même, les systèmes informatiques SI₁, SI₂ peuvent être reliés respectivement aux systèmes adaptateurs SAD₁, SAD₂, le système SIᵢ au système adaptateur SADᵢ, etc...

Les systèmes informatiques SI, SI₁... SIᵢ ont une structure analogue. Ainsi le système SI comprend un ordinateur ORD et un serveur de communication SERV, le système informatique SIᵢ comprenant de la même façon un ordinateur ORDᵢ et un serveur de communication SERVᵢ.

Les systèmes informatiques serveurs SISⱼ ont tous des structures analogues et comprennent par exemple :
- un premier serveur de communication (SERVⱼ₁)
- un second serveur de communication (SERVⱼ₂).

Tous les serveurs de communication SERV... SERVᵢ.... SERVⱼ₁ , SERVⱼ₂.... etc... ont la même structure.

De la même façon, les systèmes adaptateurs SAD,.... SADⱼ ont tous une structure analogue. Ainsi, par exemple, le système adaptateur SAD comprend une pluralité d'adaptateurs de terminaux (AD, AD₁.... ADₘ...) alors que le système adaptateur SADⱼ comprend les adaptateurs de terminaux (ADⱼ₁... ADⱼₘ...).

Chaque adaptateur AD, ...ADₘ, ADⱼ₁..., ADⱼₘ est associé à une pluralité de terminaux d'entrée/sortie synchrones ou asynchrones, 3 dans l'exemple de réalisation préféré de l'invention.

Le serveur SERV peut être, suivant les besoins, c'est-à-dire suivant le nombre de terminaux synchrones ou asynchrones qui lui sont reliés, associé à d'autres systèmes adaptateurs que SAD, par exemple notamment le système adaptateur SADₖ représente à la Figure 1. Il est évident qu'il peut en être de même pour le système informatique serveur SISⱼ qui peut être connecté à d'autres systèmes adaptateurs que le système SADⱼ, suivant le nombre de terminaux d'entrée/sortie auxquels ce système informatique serveur est relié.

Ainsi qu'il a été dit plus haut, les systèmes informatiques SIᵢ ayant entre eux une structure identique, ainsi que les systèmes informatiques serveurs SISⱼ et les systèmes adaptateurs SAD, SADⱼ, on se limitera dans la suite de la description à décrire la structure et le fonctionnement du système informatique SI, du système adaptateur SAD et de l'adaptateur AD.

On se reporte à la Figure 2.

Cette dernière montre le système informatique SI qui comprend au moins un ordinateur ORD relié d'une part par l'intermédiaire du serveur SERV au réseau ETHERNET RE et au système adaptateur SAD et d'autre part par exemple à un ensemble de réseaux de type différent, (autres que de type ETHERNET) à savoir RE₁, RE₂, .... REₖ, par l'intermédiaire d'une pluralité de liaisons de type différent.

Le serveur SERV gère et effectue le transfert des trames expédiées par l'ordinateur ORD vers les réseaux et réciproquement.

Le serveur SERV comprend :
- une unité centrale SCOM qui administre et gère le serveur. Elle charge notamment tous les logiciels et micrologiciels associés à chacune des cartes constituant le serveur, dans celles-ci, lors de leur initialisation.
- le bus PSB de type parallèle, de préférence de type MULTIBUS II,
- un ensemble CCR de contrôleurs de communication permettant de relier le serveur (et par suite ORD) aux différents réseaux RE, RE₁,... REₖ. Il comprend plus particulièrement le contrôleur de communication CCS permettant de le relier, au réseau ETHERNET RE.

Le serveur SERV, dans son ensemble, est ici considéré comme terminal du réseau RE, communiquant avec les autres terminaux SERV₁,.... SERVⱼ ...., SISⱼ, .... SAD.

L'ordinateur ORD peut être relié soit directement au bus PSB, par exemple par l'intermédiaire d'un coprocesseur MPC 82389 (fabriqué par la Société INTEL), soit de préférence, par l'intermédiaire d'un coupleur central de communication (CCC), surtout dans le cas où plusieurs ordinateurs autres que ORD (non représentés pour simplifier à la Figure 2) sont reliés au serveur SERV (CCC est représenté en traits interrompus à la Figure 2). Dans ce cas, le coupleur CCC a une structure analogue à CCS et est donc relié à ORD par l'intermédiaire de sa partie périphérique (voir plus loin).

Le système adaptateur SAD comprend, ainsi qu'il a été dit plus haut, des adaptateurs de terminaux AD, AD₁, AD₂, AD₃... ADₘ. L'adaptateur AD est associé aux terminaux d'entrée/sortie synchrones ou asynchrones T₁, T₂, T₃, alors que l'adaptateur ADm est associé aux terminaux d'entrée/sortie Tₘ₁, Tₘ₂ et Tₘ₃.

L'ensemble des adaptateurs AD,... ADₘ du système adaptateur SAD est de préférence disposé dans un même emplacement physique, constitué par exemple par un panier comportant un bus cuivre de type ETHERNET ou CHEAPERNET, à savoir BCE (BCEj pour SADj). Chacun des adaptateurs du système SAD est connecté à ce bus BCE. Ce dernier est par ailleurs connecté au câble de liaison CX₁. On voit donc que, à son tour, le système SAD peut être considéré comme un terminal particulier du réseau ETHERNET RE.

Les trames provenant de l'ordinateur ORD destinées au réseau RE parviennent par l'intermédiaire de PSB au contrôleur de communication CCS. Ce dernier divise chacune de celles-ci en une pluralité de paquets de données (le terme anglo-saxon correspondant à "paquet de données" est "buffer" ; l'un ou l'autre de ces termes sera indifféremment employé dans la suite du texte), forme à partir de ces buffers une pluralité de trames de type ETHERNET, gère et effectue le transfert de celles-ci soit vers le système d'adaptateurs SAD, soit vers les autres terminaux du réseau RE. Reciproquement, il reçoit les trames ETHERNET provenant soit du système SAD, soit des autres terminaux de réseau RE, les divise en une pluralité de buffers et à partir de ceux-ci forme des trames destinées à l'ordinateur ORD. Il gère et effectue le transfert de celles-ci depuis le réseau RE vers l'ordinateur ORD.

Le rôle de chaque adaptateur est le suivant : il reçoit les trames ETHERNET provenant du serveur SERV par l'intermédiaire du câble CX₁, les stocke, et forme des trames dont le format est spécifique à chacun des terminaux d'entrée/sortie auquel il est associé. Il effectue ensuite le transfert de ces trames ainsi formées vers chacun de ces terminaux. On peut donc dire qu'il transforme les trames de type ETHERNET en trames spécifiques à chacun des terminaux d'entrée/sortie en effectuant l'adaptation du protocole et du débit de transmission propres au réseau ETHERNET au protocole et au débit de transmission propre aux liaisons spécifiques de ces mêmes terminaux. Le même travail est effectué dans l'autre sens, c'est-à-dire depuis les terminaux d'entrée/sortie vers le réseau ETHERNET.

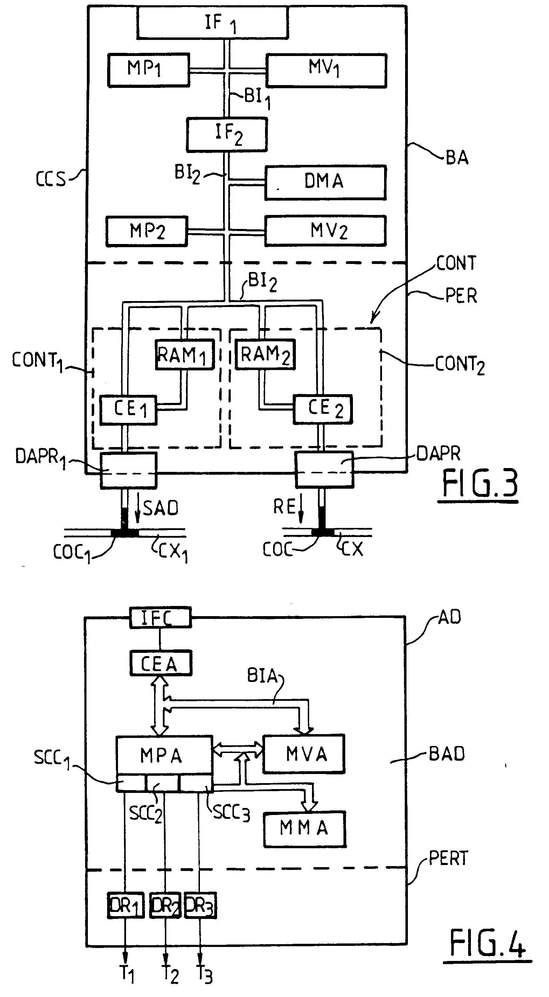

On considère la Figure 3 qui montre le contrôleur de communication CCS. Celui-ci comprend une unité de base BA et une unité périphérique PER.

L'unité de base BA, encore appelée plus simplement base, comprend :
- une interface IF₁ avec le bus PSB, de type MULTIBUS II, définie par la norme IEEE P 1296, par exemple constituée par le MPC 82389 (voir plus haut),
- un premier microprocesseur MP₁ de type 68030 de la Société MOTOROLA, associé à une première mémoire vive MV₁, de 4 Mégaoctets de capacité,
- un second microprocesseur MP₂, par exemple de type 68000 de la Société MOTOROLA, associé à une seconde mémoire vive MV₂ de 512 Kilooctets de capacité.
- une interface IF₂ permettant le dialogue entre le premier et le second microprocesseur MP₁ et MP₂, assurant l'adaptation physique des signaux transitant sur le bus interne BI₁ du premier microprocesseur MP₁ avec ceux qui transitent sur le bus interne BI₂ du second microprocesseur MP₂,
- un contrôleur de type DMA (accès direct mémoire, ou encore direct access memory en anglais).

L'unité périphérique PER comprend :
- un contrôleur de type ETHERNET, à savoir CONT, piloté par le second microprocesseur MP₂ de l'unité de base BA,
- un premier et un second dispositif de connexion physique aux câbles CX₁, CX, à savoir DAPR₁, DAPR.

Le contrôleur CONT se compose en fait de deux contrôleurs CONT₁ et CONT₂ de type ETHERNET, dont le premier est connecté par l'intermédiaire du dispositif d'adaptation physique DAPR₁ au câble CX₁ et donc à SAD et dont le second est connecté par l'intermédiaire du dispositif d'adaptation physique DAPR aux autres terminaux du réseau RE.

Le premier contrôleur CONT₁ comprend :
- un circuit intégré CE₁ d'émission et de réception pour réseau de type ETHERNET,
- une troisième mémoire vive RAM₁ de 64 kilobits de capacité, connectée à CE₁ et au bus BI₂ par un bus dumême type que ce dernier.

Le circuit intégré CE₁ est dans un exemple de réalisation préféré de l'invention, constitué par un circuit de la firme NATIONAL SEMICONDUCTORS appelé circuit SNIC ayant la référence 83901 chez ce constructeur.

Ce circuit integré permet d'émettre des trames respectant la norme 8802.3 précitée ou de recevoir des trames provenant du réseau RE conformes à cette norme. En particulier, un tel circuit integré permet de réaliser les dispositions essentielles de la norme concernant, d'une part les problèmes de l'émission, et d'autre part ceux de la réception de trames et de la détection des collisions. Un tel circuit comprend donc un circuit d'émission, un circuit de réception, un circuit détecteur de porteuse et un circuit détecteur de collision, ainsi qu'un dispositif d'encodage et de décodage qui permet d'émettre les trames selon par un exemple un code de type Manchester, ou de recevoir des trames émises suivant ce code. Pour plus de détails concernant la composition du circuit integré CE₁, on se reportera aux fiches techniques du constructeur.

Dans l'exemple de réalisation décrit ici, CE₁ est connecté à CX₁ par l'intermédiaire d'un transceiver de type CHEAPERNET normalisé, disposé sur la carte portant CCS, et d'un connecteur en T normalisé COC₁, lui-même relié au câble coaxial CX₁. COC₁ est extérieur à la carte portant CCS.

Le transceiver CAC₁ constitue donc le dispositif d'adaptation physique DAPR₁.

Le contrôleur CONT₂ identique à CONT₁ comprend :
- un circuit intégré CE₂ pour l'émission ou la réception de trames de type analogue à CE₁,
- la quatrième mémoire vive RAM₂ connectée à la fois au circuit intégré CE₂ et au bus interne BI₂ du second microprocesseur MP₂, par un bus de même type que ce dernier,

Le dispositif d'adaptation physique DAPR est identique au dispositif d'adaptation physique DAPR₁ et est donc constitué par un transceiver normalisé CHEAPERNET disposé physiquement sur la carte qui forme le contrôleur de communication CCS. Ce transceiver est relié à un connecteur en T, à savoir COC, au câble coaxial CX.

On considère désormais la Figure 4 qui montre la structure matérielle de l'adaptateur AD :

L'adaptateur AD comprend une unité de base BAD et une partie périphérique PERT.

L'unité de base BAD est strictement identique d'un adaptateur à l'autre, alors que la partie péripherique PERT diffère suivant le type de terminaux d'entrée/sortie auquel l'adaptateur est associé.

L'unité de base BAD comprend :
- une interface IFC dont le rôle est identique au dispositif d'adaptation physique DAPR ou DAPR₁ du contrôleur de communication CCS. Elle est donc constituée en fait par un transceiver de type CHEAPERNET, relié au câble CX₁ par l'intermédiaire d'un connecteur en T non représenté pour simplifier à la Figure 4,
- un contrôleur CEA de type ETHERNET, strictement identique au circuit intégré CE₁ ou CE₂,
- un microprocesseur MPA, associé d'une part à une mémoire vive MVA, de 512 Kilooctets de capacité et à une mémoire morte programmable MMA,
- les trois contrôleurs de communication série identique SCC₁, SCC₂, SCC3_{,} chacun de ceux-ci étant associé à un terminal particulier, le contrôleur SCC₁ étant associe au terminal T₁, le contrôleur SCC₂ au terminal T₂, le contrôleur SCC₃ au terminal T₃.

Dans une exemple préféré de réalisation de l'invention, le microprocesseur MPA et les 3 contrôleurs SCC₁ à SCC₃ sont constitues par un microcontrôleur 68302 de la Société MOTOROLA (on sait qu'un tel microcontrôleur est en fait formé par l'association d'un microprocesseur de type 68000 et d'une partie péripherique formée de contrôleurs de communication série. Le microprocesseur 68000 constitue donc le microprocesseur MPA alors que les 3 contrôleurs SCC₁ à SCC₃ constituent la partie périphérique du microcontrôleur 68302).

La partie périphérique PERT est constituée de 3 adaptateurs de ligne DR₁, DR₂, DR₃ correspondant respectivement chacun aux terminaux T₁, T₂, T₃ et aux contrôleurs de communication série SCC₁ à SCC₃.

Ainsi qu'on peut le voir à la Figure 4, les éléments CEA, MPA et MVA sont reliés au bus interne BIA du microprocesseur MPA, ce dernier étant par ailleurs relié aux mémoires MVA et MMA par un bus de même type que BIA.

Les adaptateurs de lignes DR₁, DR₂ et DR₃ sont par exemple constitués par des éléments 3487 - 3486 de la Société NATIONAL SEMICONDUCTORS. Rappelons que les adaptateurs de lignes ("line divers" en anglais) assurent l'adaptation électrique des niveaux de tension utilisés dans les circuits intégrés de type TTL (0 et 5 Volts) tels que ceux constituant l'adaptateur AD, au niveau utilisé sur les liaisons permettant de relier les adaptateurs aux terminaux T₁, T₂, T₃.

Il convient de préciser que chaque adaptateur tel que AD se voit attribuer par son constructeur une adresse ETHERNET sur 48 bits. Cette adresse est inscrite dans la mémoire MMA et est donc accessible par le microprocesseur MPA.

De même, chaque adaptateur, dès qu'il est inséré dans son panier, connaît, par l'intermédiaire du microprocesseur MPA, son emplacement géographique à l'intérieur du panier et le numéro de celui-ci qui est attribué arbitrairement par le constructeur. Ceci constitue son adresse géographique qui est inscrite dans le fond du panier lui-même par un dispositif de codage approprié que vient lire le microprocesseur MPA dès l'insertion de l'adaptateur dans son panier.

On considère d'abord le fonctionnement du serveur SERV à travers le fonctionnement du contrôleur de communication CCS.

Ce contrôleur supporte, dans l'exemple de réalisation préféré de la Figure 2, 2 canaux de données C₁, C₂ correspondant chacun respectivement à l'ensemble des adaptateurs AD... ADₘ du système adaptateur SAD d'une part, et d'autre part aux autres terminaux du réseau RE, c'est-à-dire SI₁... SIᵢ ...SISⱼ,....

Il peut exister plusieurs types différents de contrôleurs CCS. Ces différents types de contrôleurs peuvent traiter :
- soit un seul canal de données correspondant à un système adaptateur SAD,
- soit deux canaux correspondant chacun à un système adaptateur,
- soit, comme il est indiqué plus haut, un canal C₁ correspondant à un système adaptateur et un canal C₂ correspondant aux autres terminaux du réseau RE (SI₁... SIᵢ ... SISⱼ),
- soit un seul canal correspondant aux terminaux du réseau RE autres que SAD, (SI₁... SIᵢ ...SISⱼ),
- soit comprendre deux canaux, voire davantage, exclusivement consacrés à des terminaux tels que SI₁, ...SIᵢ ... SISⱼ.

On considère que CCS supporte les deux canaux C₁ et C₂ définis plus haut.

Le premier processeur MP₁ commande le transfert des trames circulant sur le bus PSB destinées aux terminaux du réseau RE, y compris SAD : à ce titre, il les reçoit et les stocke dans sa mémoire vive MV₁ en attendant qu'elles soient réellement transférées vers le réseau RE. Réciproquement, il reçoit dans sa mémoire vive MV₁ les trames provenant du réseau RE, avant de les envoyer via le bus PSB vers ORD.

A l'émission, le premier processeur découpe chacune des trames en une pluralité de paquets de données (buffers) tels que BF₁, BF₂, ..., BFₙ. MP₁ alloue à chacun de ceux-ci un emplacement physique déterminé dans la mémoire vive MV₁. Dès que l'un des deux canaux de données C₁ ou C₂ (voir plus haut) est disponible, le premier processeur demande au second processeur MP₂ d'effectuer le transfert de chacune des trames, buffer par buffer, depuis la mémoire vive MV₁ vers le contrôleur CONT puis le réseau RE, dans le canal approprié, par exemple C₁, à travers les bus internes BI₁, BI₂ et l'interface IF₂, puis de constituer des trames ETHERNET à partir des buffers et de les envoyer sur le réseau RE. En d'autres termes, le premier processeur gère le transfert de chacune des trames qu'il reçoit de PSB ou du réseau RE, à travers les deux canaux C₁ et C₂ affectés à chacune et ce, tant à l'émission qu'à la réception. En réception, des emplacements physiques en MV₁ sont alloues, par MP₂, aux différents buffers constituant chaque trame, désignés par exemple par BF₁₀₁ à BFₘ, ces emplacements étant différents de ceux alloués à BF₁, ... BFₙ.

Le second processeur MP₂, ayant reçu la demande de transfert de la part du premier processeur MP₁, effectue le transfert de chaque trame, buffer par buffer, dans le canal C₁, depuis la première mémoire MV₁ jusqu'à la partie périphérique PER, où les buffers de celle-ci sont stockés dans l'une des deux mémoires vives RAM₁ ou RAM₂, suivant que la trame en question, que nous désignerons sous le terme générique de trame bus est destinée, soit à l'un des adaptateurs de SAD, soit à n'importe quel autre terminal de RE.

A partir des différents buffers d'une trame bus,le second processeur MP₂ constitue des trames dites trames ETHERNET ayant une longueur comprise entre une longueur minimum et une longueur maximum fixée par la norme 8802.3 précitée. Une telle trame est constituée à partir de plusieurs buffers stockés dans la mémoire MV₁ par le premier processeur MP₁. En effet, dans un exemple de réalisation préféré de l'invention, tout buffer stocké dans la mémoire MV₁ et formé par le premier processeur MP₁ a une longueur donnée paramétrable, par exemple 200 octets, alors que la longueur maximum d'une trame ETHERNET est de 1500 octets. Une trame ETHERNET peut donc être, par exemple, formée par l'association de huit buffers. MP₂ dispose la suite de ces derniers, de telle sorte qu'ils soient disposés physiquement à la suite les uns des autres dans la mémoire RAM₁.

Dès que le contrôleur CONT reçoit de la part du second processeur MP₂ l'ordre de transférer vers le réseau RE une trame ETHERNET, l'un ou l'autre des deux circuits intégrés CE₁ ou CE₂ va chercher les données formant ladite trame stockée dans la mémoire vive RAM₁ ou RAM₂ et les transfère vers SAD ou les autres terminaux de RE en respectant les dispositions de la norme 8802.3 précitée.

En réception, le second processeur MP₂ effectue le transfert de la trame ETHERNET provenant du réseau RE dans le canal approprié en allant la chercher dans la mémoire vive RAM₁ - RAM₂ où elle a été stockée par l'un des deux circuits intégrés CE₁, CE₂. Le second processeur redécoupe la trame ETHERNET reçue en un certain nombre de buffers dont la longueur maximale est de 200 octets, ces buffers étant envoyés par ce dernier depuis l'une ou l'autre des deux mémoires vives RAM₁, RAM₂ vers la première mémoire MV₁, dans les emplacements de cette dernière qu'il a alloués à cet effet.

Le but de la présence des deux mémoires vives RAM₁ ou RAM₂ est en fait d'adapter les vitesses entre le débit ETHERNET sur le réseau RE qui est de 10 Mégabits/s et la vitesse de traitement des trames et des buffers les constituant par MP₁ et MP₂. Ipso facto, elles assurent l'adaptation entre, d'une part les débits sur le réseau RE, et d'autre part sur le bus PSB.

Le premier et le second processeur MP₁, MP₂, exécutent leur travail sur instructions respectivement d'un logiciel de communication CNS (voir plus haut) et d'un micrologiciel AML.

Lors de la mise sous tension du contrôleur de communication CCS, le logiciel de communication CNS et le micrologiciel AML qui sont implantes sur les mémoires à disque MD du serveur SERV, sont charges dans chacune des mémoires vives MV₁ et MV₂, respectivement. Ce chargement s'effectue à travers le bus PSB. Bien entendu, il a lieu une fois que la carte correspondant au contrôleur de communication CCS a été initialisée. Cette initialisation s'effectue sous la conduite d'un programme micrologiciel stocké dans une mémoire programmable de type PROM implantée dans l'unité de base BA et non représentée à la Figure 2 et à la Figure 3 pour simplifier.

Le logiciel de communication est en fait le système d'exploitation du contrôleur de communication CCS (il constitue l'operating system selon la terminologie anglo-saxonne). Ce logiciel organise le travail de liaison entre le bus PSB et le micrologiciel AML qui est chargé plus spécialement d'effectuer le transfert de chacune des trames dans les canaux C₁, C₂ aussi bien à l'émission qu'à la réception.

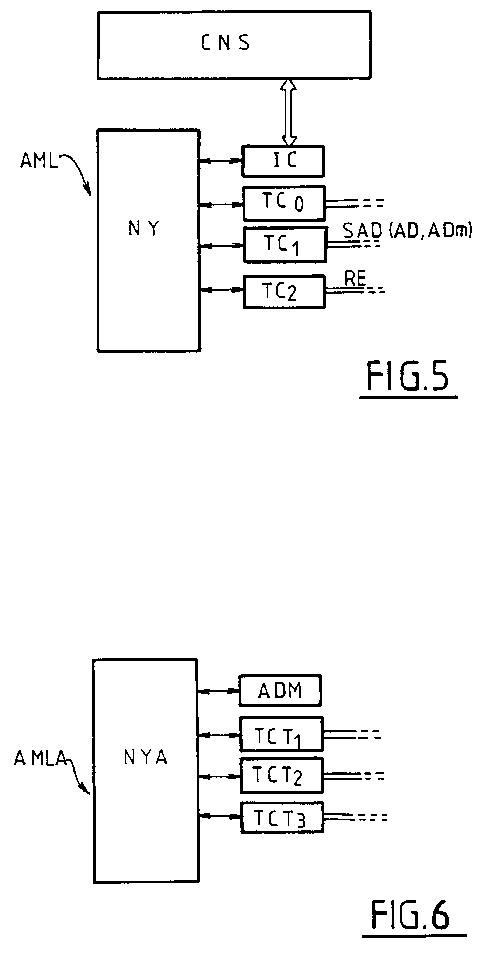

On considère la Figure 5 qui montre de façon fort schématique les liaisons existant entre le logiciel de communication CNS et le micrologiciel AML.

Le micrologiciel AML comprend un noyau NY, une interface de communication IC, permettant le dialogue entre le logiciel de communication CNS et le micrologiciel AML, ainsi qu'une pluralité de modules micrologiciels, encore appelés tâches, à savoir TC₀, TC₁, TC₂. Les modules TC₁, TC₂ correspondent chacun aux deux canaux C₁, C₂ définis plus haut. Ils sont donc chargés d'effectuer le transfert des trames affectées à chacun de ces canaux depuis la mémoire MV₁ vers la partie périphérique PER et réciproquement. La tâche TC₀ est propre à la carte portant le contrôleur CCS. Elle est utilisée pour remettre à 0 l'ensemble des composants constituant la carte CCS.

Chaque tâche correspondant à un canal est une tâche indépendante des autres. Le déroulement des tâches est organisé en temps réel par le noyau NY.

Le micrologiciel AML qui reçoit ses commandes du logiciel CNS, est vu par celui-ci comme un ensemble de trois tâches indépendantes. Néanmoins, les tâches TC₀, TC₁, TC₂, peuvent fonctionner simultanément sous la conduite du noyau NY. Chacune d'elles a donc des liaisons directes avec ce dernier mais n'en a aucune avec les autres.

Le module IC gère l'interface avec le logiciel CNS. Il acquitte les demandes provenant de celui-ci et les aiguille vers les différentes tâches correspondant aux différents canaux pour que celles-ci soient exécutées. Symétriquement, il se charge des transferts d'état ou de données provenant des canaux correspondant à chacune des tâches, destinées au logiciel CNS.

Les échanges entre l'unité de base BA et l'unité périphérique PER se définissent par des descripteurs de commande. Un descripteur de commande correspond à une trame déterminée soit à l'émission, soit à la réception, et définit les opérations qui doivent être accomplies sur celles-ci (activation de canal, en réception et désactivation de ce dernier, émission de données, purge de commande lorsqu'une émission est stoppée).

De plus amples détails sur la constitution des descripteurs de commande et sur la nature des opérations successives effectuées par la tâche TC₁ lors de l'émission d'une trame TR₁ et lors de la réception d'une trame TR₁₀₁ se trouvent dans la demande de brevet français n° 90.12826 déposée le 17 octobre 1990 par la Société demanderesse.

On considère la figure 6 qui montre la structure de l'architecture micrologicielle AMLA de l'un quelconque des adaptateurs de terminaux, par exemple l'adaptateur AD.

Cette structure est similaire à la structure AML de l'architecture micrologicielle du contrôleur de communication CCS.

La structure AMLA comprend :
- le noyau NYA dont le rôle est identique à celui du noyau de l'architecture AML,
- la tâche d'administration ADM qui est un programme résident de l'adaptateur AD et est inscrit dans la mémoire morte programmable MMA. Cette tâche joue un rôle lors de l'initialisation de l'adaptateur AD, comme on le verra plus en détail dans la suite de cette description,
- les 3 tâches TCT₁, TCT₂, TCT₃ spécifiques à chaque adaptateur, qui sont contenues dans la mémoire MVA. Ces tâches sont par exemple mémorisées dans la mémoire à disque MD du serveur SERV et sont transférées depuis cette mémoire à disque vers la mémoire MVA via le contrôleur CCS, le câble coaxial CX₁, l'interface IFC, le circuit intégré CEA et le bus BIA, lors de l'initialisation de l'adaptateur AD. Le rôle de ces tâches est de gérer, organiser et effectuer le transfert des trames de données depuis les terminaux T₁, T₂, T₃ vers le réseau RE, y compris SERV et réciproquement. Le rôle de chacune des tâches TCT₁ à TCT₃ sera exposée plus en détails ci-après, dans la description détaillée de l'adaptateur AD.

La tâche d'administration (ADM) et les trois tâches (TCT₁ à TCT₃) sont indépendantes les unes des autres, leur travail étant organisé en temps réel par le noyau (NYA).

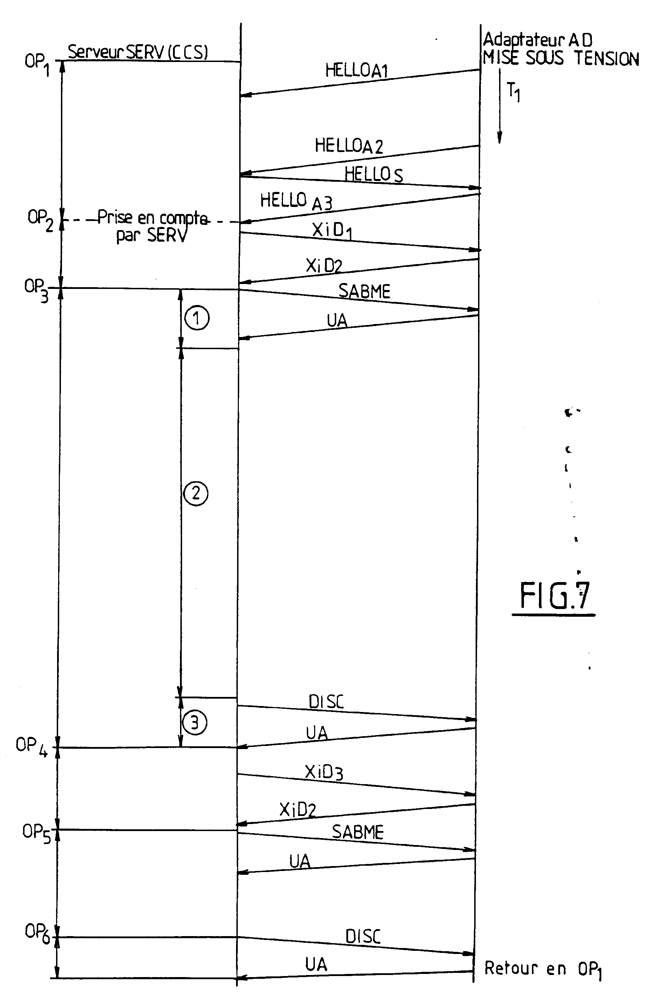

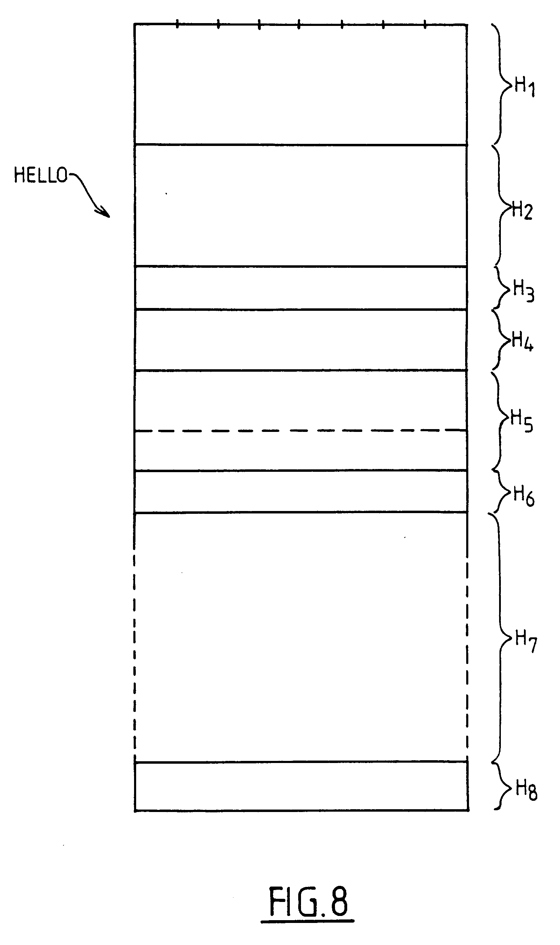

On considère désormais les Figures 7 et 8 qui illustrent le fonctionnement détaillé de l'adaptateur AD.

Ce fonctionnement peut se décomposer en 6 opérations essentielles successives OP₁ à OP₆ qui sont les suivantes :

### Opération OP₁ :

Cette opération débute dès la mise sous tension de l'adaptateur. Ce dernier envoie un message de type "HELLO", ici désigné par HELLO_{A1}, qui est envoyé à tous les serveurs des différents systèmes informatiques constituant l'architecture ARCH selon l'invention. Ainsi le serveur SERV reçoit ce message de type HELLO, ainsi que les serveurs SERVᵢ, SERVⱼ. Dans ce message, dont la structure détaillée sera décrite en relation avec la Figure 7, l'adaptateur dit qui il est, c'est-à-dire indique la nature de la fonction qu'il exerce dans le système informatique auquel il appartient, la position qu'il occupe et le numéro du panier dans lequel il se trouve, son type (pour un adaptateur exerçant la même fonction, il peut exister plusieurs versions successives de réalisation de celui-ci), son adresse ETHERNET mémorisée dans MMA, ainsi qu'il a été dit plus haut.

Si aucun serveur ne répond au premier message HELLO_{A1}, l'adaptateur AD réémet un message HELLO_{A2} identique au précédent, T₁ secondes après l'émission de celui-ci (ce temps T₁ défini par une horloge interne de l'adaptateur, est assez long, de l'ordre de quelques minutes).

En réponse à ce second message HELLO_{A2}, l'un des serveurs, par exemple le serveur SERV (et par suite son contrôleur de communication CCS) s'estime prêt à prendre en compte tout type de message ultérieur envoyé par l'adaptateur AD. A cet effet, il envoie à ce dernier un message de type HELLO, ici désigné HELLO_{S}, message dont la structure est similaire à celle de l'un ou l'autre des deux messages HELLO_{A1}-HELLO_{A2}. Dans ce message, le serveur indique qui il est, son type et son adresse ETHERNET.

La structure détaillée d'un message de type HELLO apparaît à la Figure 8.

Un tel message comprend les parties suivantes H₁ à H₈ :

### Partie H₁ :

Cette partie contient 6 octets de 8 bits. On notera qu'à la Figure 8 les bits 1 à 8 de chaque octet occupent une disposition telle que le bit le moins signifiant est situé à droite et le bit le plus signifiant à gauche. Cette partie H₁ contient l'adresse ETHERNET du système destinataire. Lorsque le message est envoyé par un adaptateur (HELLO_{A1}-HELLO_{A2}), H₁ est une adresse ETHERNET dite "broadcast". Cela signifie que tous les systèmes (c'est-à-dire tous les serveurs) des systèmes informatiques constituant l'architecture ARCH reçoivent ce message de type HELLO émis par l'adaptateur, ici AD. En d'autres termes, cette adresse "broadcast" est un moyen pour prévenir tout le monde que l'adaptateur désire entrer en communication avec n'importe lequel des serveurs. Dans un mode de réalisation de l'invention, pour un message tel que HELLO_{A1} ou HELLO_{A2}, tous les bits des 6 octets constituant cette partie H₁ sont égaux à 1. Dans le cas où un serveur envoie un message tel que HELLO_{S} à un adaptateur, cette partie H₁ contient l'adresse ETHERNET de l'adaptateur auquel ce serveur s'adresse.

### Partie H₂ :

Cette partie contient 6 octets de 8 bits et définit l'adresse ETHERNET du système émetteur. Les 3 premiers octets sont attribués mondialement à un constructeur donné, alors que les 3 octets suivants sont attribués par ce même constructeur à chacun des systèmes qu'il fabrique. Ainsi, le constructeur peut donner à chaque système qu'il fabrique, c'est-à-dire par exemple à chaque serveur ou à chaque adaptateur, sur les 3 octets précedemment définis, le numéro de série de fabrication de ce système. Avant d'envoyer un message de type HELLO, l'adaptateur va chercher cette adresse ETHERNET dans MMA et l'insère dans le message.

### Partie H₃ :

Cette partie comprend 2 octets et définit la longueur totale en nombre d'octets du message, à partir de H3, c'est-à-dire la longueur totale en nombre d'octets des parties H₄ à H₈.

Le rôle et la structure de chacune des parties H₁ à H₃ sont définis par la norme ISO 8802.3.

### Partie H₄ :

Cette partie contient 3 octets. Son rôle et sa structure sont définis par la norme ISO 8802.2 type 1. Elle indique si le constructeur a défini un protocole spécifique, dit protocole "proprietary". En effet, les normes ETHERNET laissent la possibilité à chaque constructeur d'établir à l'intérieur même de la norme ETHERNET des protocoles spécifiques, dits protocole "proprietary". Dans le cas où il en est ainsi, la valeur de chacun des 3 octets constituant cette partie H4 est déterminée par la norme.

### Partie H₅ :

Cette partie imposée par la norme ISO 10178, annexe B ou la norme IEEE 802.1, supplément A, indique quel est le propriétaire du protocole "proprietary", ici par exemple, la Société demanderesse, et quel est le numéro du protocole chez ce même propriétaire. En effet, un même propriétaire peut élaborer plusieurs protocoles. Cette partie H₅ indique donc quel est le protocole utilisé pour le message HELLO parmi tous les protocoles définis par le constructeur.

### Partie H₆ :

Cette partie comprend 2 octets, le premier indiquant quelle est la version du protocole indiqué dans la partie H₅ (un même protocole chez un même constructeur peut comporter plusieurs versions). Le second octet indique qu'il n'y a pas d'octet de remplissage après celui-ci pour retrouver une frontière entre deux mots. En effet, dans un mode de réalisation préféré de l'invention, il a été choisi de constituer un message par un nombre entier de mots de 32 bits, soit 4 octets de 8 bits. Dans l'envoi d'un message, on envoie successivement des mots et il faut déterminer la frontière entre ces mots. Le second octet de la partie H₆ permet donc de déterminer la frontière entre deux mots.

### Partie H₇ :

Cette partie dont le nombre d'octets est variable (dans la limite, évidemment, où le nombre total d'octets du message est compris entre une valeur minimum, soit 64 octets, et une valeur maximum, soit 1500 octets, conformément à la norme ETHERNET), définit les paramètres du message qui sont, dans l'ordre, les suivants :
- un identifiant fonctionnel du système qui envoie la trame : cet identifiant définit la nature du système informatique qui envoie la trame, c'est-à-dire soit un système de type SIᵢ, soit un système de type SAD (= adaptateur), soit un système informatique serveur tel que SISⱼ,
- le numéro de version de réalisation de l'identifiant fonctionnel défini ci-dessus. En effet, un identifiant fonctionnel peut avoir plusieurs versions successives de réalisation par le même constructeur,
- le type d'attachement : cela définit la nature du réseau auquel attaché l'identifiant fonctionnel, dans le cas présent un réseau de type ETHERNET, mais ce peut être également un réseau de type FDDI (réseau fibre optique),
- le numéro de l'attachement : un même système informatique peut avoir plusieurs attachements à un même réseau,
- ce paramètre définit les particularités spécifiques de l'adaptateur, c'est-à-dire son type, autrement dit la nature du (ou des) terminal(aux) auquel(auxquels) il est associé, ainsi que le dernier système auquel cet adaptateur a été connecté, ce dernier étant défini par son numéro d'attachement, son adresse ETHERNET et son identifiant physique qui est spécifique du type du système fabriqué par le constructeur. Ainsi une machine de type DPS 7000 du constructeur BULL a un identifiant physique déterminé, alors qu'une machine de type DPS 6000 a un autre identifiant déterminé. Dans cette partie, on indique également l'adresse géographique occupée par l'adaptateur (définie plus haut), le numéro de version de réalisation de l'adaptateur.

### Partie H₈ :

Cette partie contient les informations habituelles de fin de trame ETHERNET qui sont définies par la norme ISO 8802. 3.

Dès réception par l'adaptateur AD du message HELLO_{S} émis par le serveur SERV, AD renvoie un message de type HELLO, à savoir HELLO_{A3} dans lequel la partie H₁ contient l'adresse du serveur SERV. Dès que ce dernier a reçu ce message, il décide de prendre en compte tous les messages émis par l'adaptateur AD. L'operation OP₂ débute alors.

### Opération OP₂ :

Le serveur SERV (en fait le contrôleur CCS) envoie un message XID₁ à AD. Ce message est un message de connexion, ou encore un message d'échange d'identité (identity exchange). La structure de ce message et le contenu de chacune des parties le constituant sont définis par la norme ISO 8885. A l'intérieur du champ de données (user data field) de ce message, défini par la norme précédente, on introduit l'identifiant du système metteur, c'est-à-dire l'identifiant du serveur SERV, cet identifiant étant défini plus haut. Le message XID₁ signifie que le serveur SERV demande à l'adaptateur d'ouvrir la procédure dite LAP définie par la norme ISO 7776, permettant le lien entre les couches 2 du modèle de référence OSI (défini également par l'ISO) relatives au serveur SERV et à l'adaptateur AD. Rappelons que la procédure dite LAP permet l'échange sécurisé d'informations entre deux systèmes avec contrôle de flux. La procédure LAP de l'adaptateur AD est inscrite dans la mémoire MMA.

En réponse au message XID₁, AD renvoie un message XID₂ de même structure générale que XID₁. Ce message signifie que l'adaptateur est prêt à mettre en oeuvre la procédure LAP. On passe alors à l'opération OP₃.

### Opération OP₃ :

Cette opération se subdivise en trois sous-opérations :
- sous-opération 1 : le serveur SERV envoie un message SABME à l'adaptateur AD. En réponse à ce dernier, l'adaptateur renvoie un message UA au serveur. Le premier de ces messages signifie que le serveur entame la procédure LAP, et le second signifie que l'adaptateur est également d'accord pour l'entamer.
- sous-opération 2 : au cours de cette sous-opération, le serveur SERV transfère dans l'adaptateur AD où elle est stockée dans la mémoire MVA, d'une part la dernière version de la procédure LAP, conforme aux spécifications du constructeur BULL S.A., connue sous le nom de DSA 77. Cette procédure contient également le fonctionnement relatif aux couches supérieures du modèle de référence OSI, lui aussi conforme aux spécifications DSA 77.

Par ailleurs, lors de cette sous-opération 2, SERV envoie à l'adaptateur AD le programme de transfert de données de l'adaptateur vers le réseau et vice-versa, c'est-à-dire l'ensemble micrologiciel AMLA constitué par le noyau NYA et les tâches TCT₁ à TCT₃. Ceux-ci sont stockés dans la mémoire MVA.

La procédure LAP, le fonctionnement des couches supérieures du modèle OSI, conforme aux spécifications DSA 77, ainsi que l'ensemble micrologiciel AMLA, tels que définis ci-dessus, sont transférés depuis la mémoire à disque MD vers l'adaptateur où ils sont chargés dans MVA. Lorsque ce chargement en mémoire MVA est terminé, la sous-opération 3 débute : le serveur SERV envoie un message de déconnexion DISC à l'adaptateur AD. Ce message signifie d'une part que le chargement de programme est terminé et d'autre part que l'adaptateur AD peut désormais mettre en oeuvre la procédure LAP contenue dans sa mémoire vive MVA. En d'autres termes, cela signifie que la procédure LAP contenue dans la mémoire morte MMA n'est plus utilisée par l'adaptateur AD à partir du moment où ce dernier reçoit ce message DISC. En réponse à ce dernier, l'adaptateur AD envoie un message UA au serveur. On constate donc que pour l'adaptateur AD, toutes les opérations OP₁ à OP₃ comprise, sont conduites en mettant en oeuvre (par l'intermédiaire du microprocesseur MPA) la procédure LAP inscrite dans la mémoire morte MMA. On passe désormais à l'opération OP₄.

### Opération OP₄ :

L'adaptateur AD attend que le serveur lui demande de mettre en oeuvre la procédure LAP contenue dans sa mémoire vive MVA. SERV met fin à cette attente en envoyant un message XID₃ indiquant qu'il demande à AD d'établir la procédure LAP contenue dans MVA. L'adaptateur répond en envoyant un message XID₂ (identique au message envoyé lors de l'opération OP₂). On passe alors à l'opération OP₅.

### Opération OP₅ :

SERV envoie un message SABME (voir opération OP₃) à l'adaptateur qui renvoie un message UA. Depuis le début de l'opération OP1 jusqu'à cet instant, le travail de AD est effectué par MPA sous la conduite de la tâche ADM. SERV et AD procèdent alors à l'échange d'informations entre le système informatique et les trois terminaux T₁, T₂ T₃. La manière dont le serveur, par l'intermédiaire de son contrôleur CCS, gère et effectue le transfert des informations depuis l'ordinateur ORD vers le réseau et réciproquement a été décrite plus haut. La manière dont l'adaptateur AD gère et effectue le transfert des informations depuis le réseau vers les terminaux et réciproquement est décrite plus loin (sous la conduite des tâches TCT₁ à TCT₃).

### Opération OP₆ :

Lorsque le serveur et l'adaptateur AD ont terminé leurs échanges, le serveur SERV envoie un message de déconnexion DISC (voir ci-dessus à la fin de l'opération OP₃) à l'adaptateur AD qui renvoie le message UA au serveur (voir également ci-dessus fin de l'opération OP₃).

On considère désormais le fonctionnement de l'adaptateur AD, lors de l'échange d'informations avec le serveur SERV. On suppose tout d'abord que le serveur SERV envoie une trame d'informations ETHERNET destinée au terminal T₁. Soit TE cette trame. Elle passe par le transceiver IFC puis par le circuit integré CEA qui vérifie que les principales dispositions de la norme ETHERNET sont respectées. Une fois ceci effectué, il envoie la trame, à travers le bus BIA dans la mémoire vive MVA où elle est alors prise en compte par le microprocesseur MPA, sous la conduite de la tâche TCT₁. Le microprocesseur MPA examine les données d'encadrement de la trame TE, constate que les données de celle-ci sont destinées au terminal T₁, extrait les données utiles de la trame (hors données d'encadrement propres aux normes ETHERNET) et ajoute à ces données utiles des données d'encadrement propres à la nature de la liaison associée au terminal T₁. Une fois ceci effectué, il transmet les données au contrôleur de communication série SCC₁ qui transmet ces données en série vers le terminal T₁ par l'intermédiaire de l'adaptateur de ligne DR₁.

Réciproquement, pour une trame envoyée par le terminal T₁ vers le serveur SERV, à savoir une trame TL, celle-ci passe par l'adaptateur de ligne DR₁ et est transmise au contrôleur de communication série SCC₁, lequel la transmet au microprocesseur MPA qui la stocke dans la mémoire MVA. Il y lit les données d'encadrement de cette trame, constate qu'elle est destinée au serveur SERV, en extrait les données utiles et y ajoute des données d'encadrement de manière à constituer une trame ETHERNET. Dès que ceci est terminé, la trame ETHERNET ainsi formée transite par l'intermédiaire du bus BIA du circuit intégré CEA et du transceiver IFC vers le coaxial CX₁ qui l'achemine vers le serveur.

On constate que le fonctionnement de l'adaptateur AD est, dans ses grandes lignes, analogue au fonctionnement du contrôleur CCS, la mémoire MVA jouant à elle seule un rôle analogue à celui de l'ensemble des mémoires MV₁, MV₂ et RAM₁-RAM₂, le microprocesseur MPA jouant à lui seul un rôle analogue à celui de l'ensemble des microprocesseurs MP₁ et MP₂, le circuit CEA jouant un rôle analogue à celui de CE₁ ou CE₂. De la même façon, le rôle joué par la procédure LAP inscrite dans MVA s'apparente à celui du logiciel CNS et le rôle de AMLA est similaire à celui de AML.

Par ailleurs, tout comme dans CCS, le microprocesseur MPA définit pour chaque trame reçue ou à émettre des descripteurs de commande, et découpe chacune de celles-ci en une pluralité de buffers auxquels il alloue des emplacements parfaitement définis en mémoire MVA. On se reportera donc utilement, pour plus de détails, à la demande de brevet français n° 90.12826 précitée, pour connaître la structure des descripteurs de commande et la manière dont s'articulent entre eux descripteurs de commande et buffers, à l'intérieur de MVA.

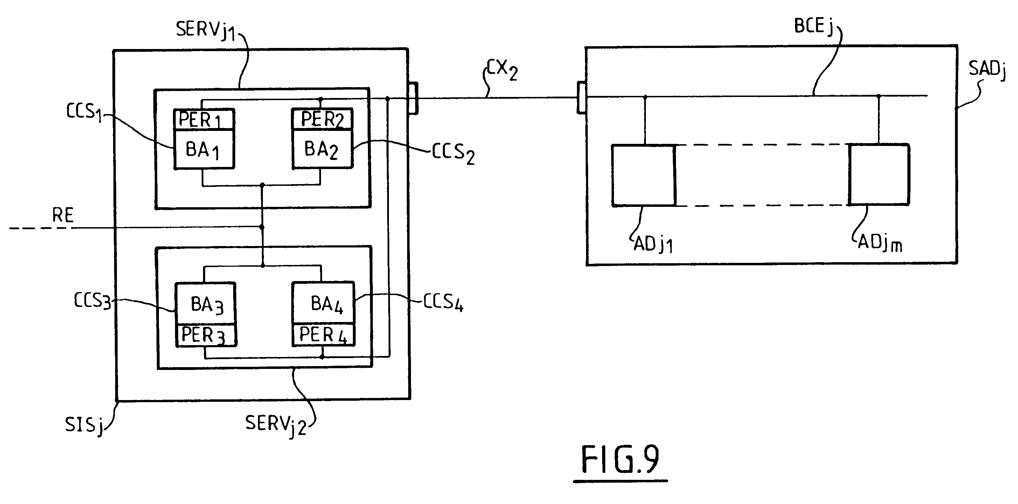

On considère la Figure 9 qui montre un système informatique serveur SISⱼ permettant d'assurer le transfert d'informations depuis un système adaptateur SADⱼ vers le réseau RE avec le maximum de sécurité, sans qu'à aucun moment le transfert de trame du réseau vers le système adaptateur ou réciproquement puisse être interrompu pour quelque raison que ce soit (mise hors d'usage d'un serveur, opération de maintenance, etc..).

Le système informatique serveur SISⱼ comprend deux serveurs SERVⱼ₁ et SERVⱼ₂.

Le serveur SERVⱼ₁ comprend deux contrôleurs de communication CCS₁ et CCS₂, alors que le serveur SERVⱼ₂ comprend deux contrôleurs de communication CCS₃ et CCS₄.

Les quatre contrôleurs de communication CCS₁ à CCS₄ sont identiques au contrôleur de communication CCS montré à la Figure 3. Ainsi le contrôleur CCS₁ comprend une base BA₁ et une partie périphérique PER₁, le contrôleur CCS₂ une base BA₂ et une partie périphérique PER₂. De même les contrôleurs CCS₃ et CCS₄ comprennent respectivement les bases BA₃ et BA₄ et les parties périphériques PER₃ et PER₄.

Les quatre bases BA₁ à BA₄ sont reliées ensemble au réseau RE alors que les quatre parties périphériques PER₁ à PER₄ sont reliées ensemble au coaxial CX₂ qui relie le système informatique serveur SISⱼ au système adaptateur SADⱼ.

Plus précisément, les bases BA₁ à BA₄ sont reliées au réseau RE par l'intermédiaire d'un contrôleur de communication ETHERNET du type de celui décrit dans la demande n° 90.12826 précitée. Les quatre bases BA₁ à BA₄ et la base de ce contrôleur ETHERNET sont donc reliées entre elles par un même MULTIBUS II alors que la partie périphérique de ce dernier est reliée au réseau RE.

Ainsi on peut voir qu'une trame TE provenant du réseau RE transitant normalement par le contrôleur CCS₁ peut, si ce dernier est défectueux ou absent, transiter par le contrôleur CCS₂. Si ce dernier est à son tour défectueux, la trame TE peut transiter, soit par CCS₃ ou CCS₄. Un raisonnement identique peut être tenu pour l'un ou l'autre des deux contrôleurs CCS₃ ou CCS₄, au cas où la trame TE transite normalement par l'un ou l'autre de ces deux derniers.

Ainsi, avec le système SISⱼ de la Figure 9, la probabilité pour qu'une trame TE provenant du réseau RE ne parvienne pas au système adaptateur SADⱼ est pratiquement nulle.

## Revendications

1. Architecture informatique distribuée (ARCH) comprenant une pluralité de systèmes informatiques (SI,...SIi,...SISj) connectés chacun par l'intermédiaire de serveurs de communication (SERV, SERVi,) à une pluralité de réseaux (RE, RE1,... REk) de communication de divers types, caractérisée en ce que chaque système informatique est relié à une pluralité de terminaux synchrones ou asynchrones (T1,T2,T3, Tj1, Tj2,... Tjm) par l'intermédiaire d'au moins un réseau (RE) de type CSMA/CD et d'adaptateurs de terminaux (AD,... ADm, ADJ1,... ADjm) pouvant former au moins un système adaptateur (SAD, SADj...), chaque adaptateur de terminaux étant connecté d'une part au réseau et d'autre part par au moins une liaison de transmission synchrone ou asynchrone à au moins un terminal (T1, T2, T3, Tj1, Tj2, Tj3), chaque serveur de communication gérant et effectuant le transfert des trames depuis au moins un système informatique vers le réseau et une pluralité d'adapateurs et réciproquement, chaque adaptateur de terminaux gérant et effectuant le transfert des trames depuis le réseau vers le(s) terminal(aux) au(x)quel(s) il est associé, et réciproquement, par l'intermédiaire d'une architecture micrologicielle (AMLA) réalisant l'adaptation des protocoles et des débits de transmission utilisés respectivement sur le réseau (RE) et sur les liaisons de transmission associées à ce même adaptateur, chaque architecture micrologicielle (AMLA) incluant un noyau (NYA), une tâche d'administration (ADM), plusieurs tâches (TCT1, TCT2, TCT3) en nombre égal au nombre de terminaux d'entrée/sortie associés à l'adaptateur, chacune de ces tâches étant associée à un seul de ceux-ci, la tâche d'administration permettant à l'adaptateur d'établir le dialogue avec les différents systèmes composant l'architecture informatique lors de l'initialisation de l'adaptateur, chaque tâche associée à un terminal d'entrée/sortie effectuant le transfert des trames de données, depuis ce dernier vers le réseau (RE) et réciproquement, chaque tâche étant indépendante des autres, son déroulement étant organisé en temps réel par le noyau (NY).

2. Architecture informatique distribuée selon la revendication 1, caractérisée en ce que chaque serveur de communication comprend au moins un contrôleur de communication (CCS, CCS1, CCS2,...) reliant le serveur d'une part à un ordinateur (ORD) par l'intermédiaire d'un bus (PSB) et d'autre part à ladite pluralité d'adaptateurs, ce contrôleur recevant, d'une part des données envoyées par l'ordinateur, formant une pluralité de trames CSMA/CD à partir de celles-ci et les envoyant vers les adaptateurs et recevant d'autre part les trames CSMA/CD envoyées par les adaptateurs, en formant des trames adaptées audit système informatique contenant le serveur et en les envoyant vers celui-ci.

3. Architecture informatique distribuée selon la revendication 2, caractérisée en ce que le contrôleur de communication supporte une liaison comportant au moins un canal de données (C1, C2,...) et comprend :
- une unité de base (BA) (ou encore base) reliée au bus (PSB),
- une unité périphérique (PER) reliée à l'unité de base (BA), et au support de transmission (CX, CX1,...)
caractérisé en ce que l'unité de base (BA) comprend :
- un premier processeur (MP1) commandant le transfert des données provenant de l'ordinateur vers le réseau et réciproquement, associé à une première mémoire (MV1)de stockage des trames avant leur transfert,
- un second processeur (MP2) communiquant avec le premier et effectuant, à l'émission et à la réception, le transfert desdites données sous forme de trames de type CSMA/CD vers le réseau (RE) et les adaptateurs (AD, ...ADm, ... ADj...) ou vers la première mémoire.
- la partie périphérique (PER) comprenant un contrôleur CSMA/CD (CONT), piloté par le second processeur (MP2) et comprenant au moins une mémoire de stockage de trames CSMA/CD (RAM1, RAM2), ces dernières étant stockées dans cette mémoire avant émission vers le réseau par le contrôleur CSMA/CD, ou avant leur transfert vers la première mémoire en réception.

4. Architecture informatique distribuée selon la revendication 3, caractérisée en ce que à l'émission, le second processeur (MP2) transfère les données sur le canal, paquet par paquet (buffer par buffer) depuis la première mémoire (MV1) jusqu'à la mémoire de stockage de trames (RAM1, RAM2).

5. Architecture informatique distribuée selon l'une des revendications 3 ou 4, caractérisée en ce que le second processeur (MP2) en réception, découpe chaque trame reçue (TR101) en un nombre déterminé de paquets (buffers) (BF101 à BF108) avant de la transférer, buffer par buffer, sur le canal, depuis la mémoire de stockage de trame (RAM1, RAM2) jusqu'à la première mémoire (MV1).

6. Architecture informatique distribuée selon l'une des revendications 3, 4, s, caractérisée en ce que le premier processeur (MP1) exécute son travail sur instruction d'un logiciel de communication (CNS) qui est inscrit, lors de l'initialisation du contrôleur (CCS) dans la première mémoire (MV1).

7. Architecture informatique distribuée selon l'une des revendications 3, 4, 5, 6, caractérisée en ce que, à l'émission, le premier processeur (MP1) reçoit les données venant du bus (PSB), les divise en une pluralité de paquets (BF1, ..., BF15) qui'il stocke de manière aléatoire dans la première mémoire (MV1) en une pluralité d'emplacements physiques différents, avant que ces paquets ne soient transférés par le second processeur (MP2) vers la mémoire de stockage et regroupés dans celle-ci par ce dernier, pour former au moins une trame de type CSMA/CD.

8. Architecture informatique distribuée selon l'une des revendications 3, 5, 6, 7, caractérisée en ce que le second processeur (MP2) exécute son travail sur instruction d'une seconde architecture micrologicielle (AML) qui est inscrite lors de l'initialisation du contrôleur de communication dans une seconde mémoire (MV2) associée au second processeur (MP2).

9. Architecture informatique distribuée selon la revendication 8, caractérisée en ce que la seconde architecture micrologicielle (AML) comprend un noyau (NY), une interface de communication (IC), permettant le dialogue entre le logiciel de communication (CNS) et la seconde architecture (AML), et une pluralité de modules micrologiciels, ou tâches (TC0, TC1, TC2) en nombre au moins égal à celui des canaux, chaque canal étant associé à un module, lequel effectue le transfert des trames affectées à ce canal, depuis la première mémoire (MV1) vers la partie périphérique (PER) et réciproquement, chaque module ou tâche étant indépendant des autres, son déroulement étant organisé en temps réel par le noyau (NY).

10. Architecture informatique distribuée selon la revendication 1, caractérisée en ce que l'architecture micrologicielle (AMLA) est comprise dans une unité de base (BAD) connectée au support de transmission (CX,CX1...) du réseau (RE),
- et en ce que une partie périphérique (PERT) est reliée d'une part à cette unité de base (BAD) et d'autre part aux terminaux d'entrée/sortie (T1 à T3) associés à l'adaptateur par l'intermédiaire des lignes de transmission spécifiques à chacun de ces terminaux,
l'unité de base de l'adaptateur recevant les trames CSMA/CD provenant du réseau (RE), les stockant et les transformant en trames spécifiques à chacune des liaisons propres à chacun desdits terminaux d'entrée/sortie auquel il est associé et effectuant le transfert de celles-ci vers ces derniers à travers la partie périphérique(PERT), et réciproquement.

11. Architecture informatique distribuée selon la revendication 10, caractérisée en ce que son unité de base (BAD) comprend
- une interface (IFC) d'adaptation physique de type CSMA/CD avec le support de transmission (CX, ...,CX1,...CX2) du réseau (RE)
- un contrôleur (CEA) CSMA/CD recevant les trames provenant du réseau (ou les envoyant vers) par l'intermédiaire de l'interface (IFC),
- un microprocesseur d'adaptateur (MVA) associé à une mémoire vive d'adaptateur (MVA),
- des contrôleurs de communication série en nombre égal au nombre de terminaux d'entrée/sortie associés à l'adaptateur, affectés chacun à la liaison de transmission propre à l'un déterminé de ces derniers,
le contrôleur (CEA) CSMA/CD transmettant les trames CSMA/CD vers le réseau (RE) via l'interface (IFC) ou vers la mémoire d'adaptateur (MVA), sous la conduite du microprocesseur d'adaptateur (MPA), lequel stocke ces trames dans sa mémoire associée (MVA) puis les transforme en trames spécifiques aux liaisons propres auxdits terminaux d'entrée/sortie avant de les envoyer aux contrôleurs de communication série qui les envoient vers ces terminaux via la partie périphérique (PERT) et réciproquement.

12. Architecture informatique distribuée selon l'une des revendications 10 ou 11, caractérisée en ce que la partie périphérique (PERT) comprend des adaptateurs de lignes (DRI à DR3) correspondant chacun à l'un des contrôleurs de communication série et l'un desdits terminaux d'entrée/sortie.

13. Architecture informatique distribuée selon la revendication 1, caractérisée en ce que la tâche d'administration (ADM) est inscrite dans une mémoire morte programmable (MMA).

## Claims

1. Distributed computer architecture (ARCH) comprising a plurality of computer systems (SI, ..., SIi, ..., SISj) each connected via communication servers (SERV, SERVi) to a plurality of communication networks (RE, RE1, ..., REk) of various types, characterised in that each computer system is connected to a plurality of synchronous or asynchronous terminals (T1, T2, T3, Tj1, Tj2, ..., Tjm) via at least one network (RE) of CSMA/CD type and terminal adapters (AD, ..., ADm, ADj1, ..., ADjm) capable of forming at least one adapter system (SAD, SADj, ...), each terminal adapter being connected on the one hand to the network and on the other hand by at least one synchronous or asynchronous transmission link to at least one terminal (T1, T2, T3, Tj1, Tj2, Tj3), each communication server managing and performing the transfer of frames from at least one computer system to the network and a plurality of adapters and vice versa, each terminal adapter managing and performing the transfer of frames from the network to the terminal(s) with which it is associated, and vice versa, via a firmware architecture (AMLA) performing the adaptation of the protocols and the transmission rates used respectively on the network (RE) and on the transmission links associated with the same adapter, each firmware architecture (AMLA) including a kernel (NYA), an administration task (ADM), several tasks (TCT1, TCT2, TCT3) equal in number to the number of input/output terminals associated with the adapter, each of these tasks being associated with a single one of these, the administration task making it possible for the adapter to establish dialogue with the various systems making up the computer architecture on initialisation of the adapter, each task associated with an input/output terminal performing the transfer of data frames, from the latter to the network (RE) and vice versa, each task being independent of the others, its progress being organised in real time by the kernel (NY).

2. Distributed computer architecture according to Claim 1, characterised in that each communication server comprises at least one communication controller (CCS, CCS1, CCS2, ...) connecting the server on the one hand to a computer (ORD) via a bus (PSB) and on the other hand to said plurality of adapters, this controller receiving, on the one hand, data sent by the computer, forming a plurality of CSMA/CD frames on the basis of said data and sending them to the adapters and on the other hand receiving the CSMA/CD frames sent by the adapters, forming frames adapted to said computer system containing the server and sending them thereto.

3. Distributed computer architecture according to Claim 2, characterised in that the communication controller supports a link comprising at least one data channel (C1, C2, ...) and comprises:
- a base unit (BA) (or base) connected to the bus (PSB),
- a peripheral unit (PER) connected to the base unit (BA), and to the transmission medium (CX, CX1, ...)
characterised in that the base unit (BA) comprises:
- a first processor (MP1) controlling the transfer of data going from the computer to the network and vice versa, associated with a first memory (MV1) for storing frames prior to their transfer,
- a second processor (MP2) communicating with the first one and, on transmission and reception, transferring said data in the form of frames of CSMA/CD type to the network (RE) and the adapters (AD, ..., ADm, ..., ADj, ...) or to the first memory.
- the peripheral portion (PER) comprising a CSMA/CD controller (CONT), driven by the second processor (MP2) and comprising at least one memory for storing CSMA/CD frames (RAM1, RAM2), the latter being stored in this memory before transmission to the network by the CSMA/CD controller, or before their transfer to the first memory in reception mode.

4. Distributed computer architecture according to Claim 3, characterised in that, on transmission, the second processor (MP2) transfers the data over the channel, packet by packet (buffer by buffer) from the first memory (MV1) to the frame storage memory (RAM1, RAM2).

5. Distributed computer architecture according to one of Claims 3 or 4, characterised in that the second processor (MP2) in reception mode cuts up each frame received (TR101) into a given number of packets (buffers) (BF101 to BF108) before transferring it, buffer by buffer, over the channel, from the frame storage memory (RAM1, RAM2) to the first memory (MV1).

6. Distributed computer architecture according to one of Claims 3, 4, 5, characterised in that the first processor (MP1) performs its work on instruction from communications software (CNS), which is recorded on initialisation of the controller (CCS) in the first memory (MV1).

7. Distributed computer architecture according to one of Claims 3, 4, 5, 6, characterised in that, on transmission, the first processor (MP1) receives the data coming from the bus (PSB), divides them into a plurality of packets (BF1, ..., BF15), which it stores in a random manner in the first memory (MV1) in a plurality of different physical locations, before these packets are transferred by the second processor (MP2) to the storage memory and grouped therein by the latter, to form at least one CSMA/CD-type frame.

8. Distributed computer architecture according to one of Claims 3, 5, 6, 7, characterised in that the second processor (MP2) executes its work on instruction from a second firmware architecture (AML), which is recorded on initialisation of the communication controller in a second memory (MV2) associated with the second processor (MP2).

9. Distributed computer architecture according to Claim 8, characterised in that the second firmware architecture (AML) comprises a kernel (NY), a communication interface (IC), permitting dialogue between the communication software (CNS) and the second architecture (AML), and a plurality of firmware modules, or tasks (TC0, TC1, TC2) at least equal in number to the number of channels, each channel being associated with a module, which transfers the frames assigned to that channel from the first memory (MV1) to the peripheral portion (PER) and vice versa, each module or task being independent of the others, its progress being organised in real time by the kernel (NY).

10. Distributed computer architecture according to Claim 1, characterised in that the firmware architecture (AMLA) is comprised in a base unit (BAD) connected to the transmission medium (CX, CX1, ...) of the network (RE),
- and in that a peripheral portion (PERT) is connected on the one hand to this base unit (BAD) and on the other hand to the input/output terminals (T1, to T3) associated with the adapter via transmission lines specific to each of these terminals,
- the base unit of the adapter receiving the CSMA/CD frames coming from the network (RE) storing them and transforming them into frames specific to each of the links for each of said input/output terminals to which it is associated and performing the transfer of said links to said terminals through the peripheral portion (PERT), and vice versa.

11. Distributed computer architecture according to Claim 10, characterised in that its base unit (BAD) comprises
- a CSMA/CD-type physical adaptation interface (IFC) with the transmission medium (CX, ..., CX1, ..., CX2) of the network (RE)
- a CSMA/CD controller (CEA) receiving the frames coming from the network (or sending them to) via the interface (IFC),
- an adapter microprocessor (MVA) associated with an adapter random access memory (MVA),
- serial communication controllers equal in number to the number of input/output terminals associated with the adapter, each assigned to the transmission link specific to a given one of the latter,
- the CSMA/CD controller (CEA) transmitting the CSMA/CD frames to the network (RE) via the interface (IFC) or to the adapter memory (MVA), under the control of the adapter microprocessor (MPA), which stores these frames in its associated memory (MVA) then transforms them into frames specific to the links for said input/output terminals before sending them to the serial communication controllers, which send them to these terminals via the peripheral portion (PERT) and vice versa.

12. Distributed computer architecture according to one of Claims 10 or 11, characterised in that the peripheral portion (PERT) comprises line adapters (DRI to DR3) each corresponding to one of the serial communication controllers and one of said input/output terminals.

13. Distributed computer architecture according to Claim 1, characterised in that the administration task (ADM) is recorded in a programmable read-only memory (MMA).

## Patentansprüche

1. Verteilte Datenverarbeitungsarchitektur (ARCH), mit mehreren Datenverarbeitungssystemen (SI, ..., SIi, ..., SISj), die jeweils über Kommunikationsserver (SERV, SERVi) an mehrere Kommunikationsnetze (RE, RE1, ..., REk) unterschiedlichen Typs angeschlossen sind, dadurch gekennzeichnet, daß jedes Datenverarbeitungssystem über wenigstens ein Netz (RE) des Typs CSMA/CD und über Terminaladapter (AD, ..., ADm, ADj1, ..., ADjm), die wenigstens ein Adaptersystem (SAD, SADj, ...) bilden können, mit mehreren synchronen oder asynchronen Terminals verbunden ist, wobei jeder Terminaladapter einerseits an das Netz und andererseits über eine synchrone oder asynchrone Übertragungsverbindung an wenigstens ein Terminal (T1, T2, T3, Tj1, Tj2, Tj3) angeschlossen ist, wobei jeder Kommunikationsserver die Übertragung von Rahmen von wenigstens einem Datenverarbeitungssystem zu dem Netz und zu mehreren Adaptern und umgekehrt steuert und ausführt, wobei jeder Terminaladapter die Übertragung von Rahmen von dem Netz an das (die) Terminal(s), dem (denen) er zugeordnet ist, und umgekehrt, über eine Mikrosoftware-Architektur (AMLA) steuert und ausführt, die die Anpassung der Protokolle und der Übertragungsdurchsätze auf dem Netz (RE) und auf den Übertragungsverbindungen, die diesem Adapter zugeordnet sind, verwirklicht, wobei jede Mikrosoftware-Architektur (AMLA) einen Kern (NYA), eine Management-Task (ADN) und mehrere Tasks (TCT1, TCT2, TCT3) deren Anzahl gleich der Anzahl der dem Adapter zugeordneten Eingangs/Ausgangs-Terminals ist, enthält, wobei jede dieser Tasks einem dieser Terminals zugeordnet ist, wobei die Management-Task dem Adapter ermöglicht, den Dialog mit den verschiedenen die Datenverarbeitungsarchitektur bildenden Systemen bei der Initialisierung des Adapters herzustellen, wobei jede einem Eingangs/Ausgangs-Terminal zugeordnete Task die Übertragung von Datenrahmen von diesem letzteren an das Netz (RE) und umgekehrt ausführt, wobei jede Task von den anderen unabhängig ist, wobei ihr Ablauf in Echtzeit vom Kern (NY) organisiert wird.

2. Verteilte Datenverarbeitungsarchitektur nach Anspruch 1, dadurch gekennzeichnet, daß jeder Kommunikationsserver wenigstens einen Kommunikationscontroller (CCS, CCS1, CCS2, ...) enthält, der den Server einerseits über einen Bus (PSB) mit einem Rechner (ORD) und andererseits mit den mehreren Adaptern verbindet, wobei dieser Controller einerseits vom Rechner geschickte Daten empfängt, die mehrere CSMA/CD-Rahmen bilden, und sie an die Adapter schickt und andererseits die von den Adaptern geschickten CSMA/CD-Rahmen empfängt, indem er Rahmen bildet, die an das den Server enthaltende Datenverarbeitungssystem angepaßt sind, und die Rahmen zu dem System schickt.

3. Verteilte Datenverarbeitungsarchitektur nach Anspruch 2, dadurch gekennzeichnet, daß der Kommunikationscontroller eine Verbindung unterstützt, die wenigstens einen Datenkanal (C1, C2, ...) aufweist, und enthält:
- eine Basiseinheit (BA) (oder Basis), die mit dem Bus (PSB) verbunden ist,
- eine Peripherieeinheit (PER), die mit der Basiseinheit (BA) und mit dem Übertragungsträger (CX, CX1, ...) verbunden ist,
dadurch gekennzeichnet, daß die Basiseinheit (BA) enthält:
- einen ersten Prozessor (MP1), der die Übertragung von vom Rechner stammenden Daten an das Netz und umgekehrt steuert und dem ein erster Speicher (MV1) zum Speichern der Rahmen vor ihrer Übertragung zugeordnet ist,
- einen zweiten Prozessor (MP2), der mit dem ersten in Verbindung steht und beim Senden und beim Empfangen die Übertragung der Daten in Form von Rahmen des CSMA/CD-Typs an das Netz (RE) und an die Adapter (AD, ..., ADm, . .., ADj, ...) oder an den ersten Speicher ausführt,
- wobei der Peripherieteil (PER) einen CSMA/CD-Controller (CONT) enthält, der vom zweiten Prozessor (MP2) gesteuert wird und wenigstens einen Speicher für CSMA/CD-Rahmen (RAM1, RAM2) aufweist, wobei diese Rahmen in diesem Speicher gespeichert werden, bevor sie vom CSMA/CD-Controller zum Netz geschickt werden oder bevor sie beim Empfang an den ersten Speicher übertragen werden.

4. Verteilte Datenverarbeitungsarchitektur nach Anspruch 3, dadurch gekennzeichnet, daß beim Senden der zweite Prozessor (MP2) die Daten auf dem Kanal paketweise (pufferweise) vom ersten Speicher (MV1) bis an den Rahmenspeicher (RAM1, RAM2) überträgt.

5. Verteiltes Datenverarbeitungssystem nach einem der Ansprüche 3 oder 4, dadurch gekennzeichnet, daß der zweite Prozessor (MP2) beim Empfang jeden empfangenen Rahmen (TR101) bei einer bestimmten Anzahl von Paketen (Puffern) (BF101 bis BF108) abschneidet, bevor er ihn auf dem Kanal pufferweise vom Rahmenspeicher (RAM1, RAM2) an den ersten Speicher (MV1) überträgt.

6. Verteilte Datenverarbeitungsarchitektur nach einem der Ansprüche 3, 4, 5, dadurch gekennzeichnet, daß der erste Prozessor (MP1) seine Arbeit bei einem Befehl einer Kommunikationssoftware (CNS) ausführt, die bei der Initialisierung des Controllers (CCS) in den ersten Speicher (MV1) geschrieben wird.

7. Verteilte Datenverarbeitungsarchitektur nach einem der Ansprüche 3, 4, 5, 6, dadurch gekennzeichnet, daß der erste Prozessor (MP1) beim Senden die vom Bus (PSB) kommenden Daten empfängt, sie in mehrere Pakete (BF1, ..., BF15) unterteilt, die er zufällig im ersten Speicher (MV1) an mehreren physikalisch verschiedenen Stellen speichert, bevor diese Pakete vom zweiten Prozessor (MP2) an den Ablagespeicher übertragen werden und in diesem vom letzteren umgeordnet werden, um wenigstens einen Rahmen des Typs CSMA/CD zu bilden.

8. Verteilte Datenverarbeitungsarchitektur nach einem der Ansprüche 3, 5, 6, 7, dadurch gekennzeichnet, daß der zweite Prozessor (MP2) seine Arbeit bei einem Befehl einer zweiten Mikrosoftware-Architektur (AML) ausführt, die bei der Initialisierung des Kommunikationscontrollers in einen dem zweiten Prozessor (MP2) zugeordneten zweiten Speicher (MV2) geschrieben wird.

9. Verteilte Datenverarbeitungsarchitektur nach Anspruch 8, dadurch gekennzeichnet, daß die zweite Mikrosoftware-Architektur (AML) einen Kern (NY), eine Kommunikationsschnittstelle (IC), die den Dialog zwischen der Kommunikationssoftware (CNS) und der zweiten Architektur (AML) ermöglicht, sowie mehrere Mikrosoftware-Module oder Tasks (TC0, TC1, TC2) enthält, deren Anzahl wenigstens gleich derjenigen der Kanäle ist, wobei jedem Kanal ein Modul zugeordnet ist, das die Übertragung von diesem Kanal zugewiesenen Rahmen vom ersten Speicher (MV1) an das Peripherieteil (PER) und umgekehrt ausführt, wobei jedes Modul oder jede Task unabhängig von den anderen ist, wobei seine Ausführung in Echtzeit vom Kern (NY) organisiert wird.

10. Verteilte Datenverarbeitungsarchitektur nach Anspruch 1, dadurch gekennzeichnet, daß die Mikrosoftware-Architektur (AMLA) in einer Basiseinheit (BAD) enthalten ist, die mit dem Übertragungsträger (CX, CX1, ...) des Netzes (RE) verbunden ist,
- und daß ein Peripherieteil (PERT) einerseits mit dieser Basiseinheit (BAD) und andererseits mit den Eingangs/Ausgangs-Terminals (T1 bis T3) verbunden ist, die dem Adapter über Übertragungsleitungen, die für jedes dieser Terminals spezifisch sind, zugeordnet sind,
wobei die Basiseinheit des Adapters die CSMA/CD-Rahmen empfängt, die vom Netz (RE) stammen, sie speichert und in Rahmen transformiert, die für jede dieser Verbindungen, die zu jedem der Eingangs/Ausgangs-Terminals gehören, denen sie zugeordnet ist, spezifisch sind, und die Übertragung der Rahmen an diese letzteren über den Peripherieteil (PERT) und umgekehrt ausführt.

11. Verteilte Datenverarbeitungsarchitektur nach Anspruch 10, dadurch gekennzeichnet, daß die Basiseinheit (BAD) enthält:
- eine Schnittstelle (IFC) zur physischen Anpassung des CSMA/CD-Typs an den Übertragungsträger (CX, ..., CX1, ..., CX2) des Netzes (RE),
- einen CSMA/CD-Controller (CEA), der die vom Netz stammenden Rahmen über die Schnittstelle (IFC) empfängt oder sie über die Schnittstelle (IFC) zu diesem schickt,
- einen Adapter-Mikroprozessor (MVA), dem ein Adapter-Schreib-Lese-Speicher (MVA) zugeordnet ist,
- Controller für serielle Kommunikation, deren Anzahl gleich der Anzahl der dem Adapter zugeordneten Eingangs/Ausgangs-Terminals ist und die jeweils der Übertragungsverbindung zugewiesen sind, die zu einem bestimmten dieser letzteren gehört,
wobei der CSMA/CD-Controller (CEA) die CSMA/CD-Rahmen unter der Steuerung des Adapter-Mikroprozessors (MPA) über die Schnittstelle (IFC) an das Netz (RE) oder aber an den Adapterspeicher (MVA) überträgt, der diese Rahmen in seinem zugeordneten Speicher (MVA) speichert und sie dann in Rahmen transformiert, die für die zu den Eingangs/Ausgangs-Terminals gehörenden Verbindungen spezifisch sind, bevor er sie an die Controller für serielle Kommunikation schickt, die sie an diese Terminals über den Peripherieteil (PERT) und umgekehrt schicken.

12. Verteilte Datenverarbeitungsarchitektur nach einem der Ansprüche 10 oder 11, dadurch gekennzeichnet, daß der Peripherieteil (PERT) Leitungsadapter (DR1 bis DR3) enthält, die jeweils einem der Controller für serielle Kommunikation und einem der Eingangs/Ausgangs-Terminals entsprechen.

13. Verteilte Datenverarbeitungsarchitektur nach Anspruch 1, dadurch gekennzeichnet, daß die Management-Task (ADM) in einen programmierbaren Festwertspeicher (MMA) geschrieben ist.
